Europäisches Patentamt

European Patent Office

Office européen des brevets

(19)

(11) Publication number: **0 090 987**
**A1**

(12) **EUROPEAN PATENT APPLICATION**

(21) Application number: **83102712.3**

(22) Date of filing: **18.03.83**

(51) Int. Cl.³: **G 02 F 1/13**
**G 02 F 1/133, G 02 F 3/00**
**H 04 N 3/12**

(30) Priority: **01.04.82 GB 8209710**

(43) Date of publication of application:
**12.10.83 Bulletin 83/41**

(84) Designated Contracting States:
**CH DE FR IT LI NL**

(71) Applicant: **International Standard Electric Corporation**
**320 Park Avenue**
**New York New York 10022(US)**

(72) Inventor: **Crossland, William Alden**
**15 School Lane**
**Harlow Essex(GB)**

(72) Inventor: **Peters, Jack Rowland**
**The Pound House Great Canfield**
**Dunmow Essex(GB)**

(72) Inventor: **Ross, Peter William**
**15 Twyford Gardens**
**Bishop s Stortford Hertfordshire(GB)**

(72) Inventor: **Ayliffe, Peter John**
**150 Heath Row**
**Bishop s. Stortford, Hertfordshire(GB)**

(74) Representative: **Pohl, Heribert, Dipl.-Ing et al,**
**Standard Elektrik Lorenz AG Patent- und Lizenzwesen**
**Kurze Strasse 8 Postfach 300 929**
**D-7000 Stuttgart 30(DE)**

(54) Coherent light image generation.

(57) A coherent light image generator for signal processing such as image correlation directs laser light (1) on to a specularly reflecting matrix addressed dyed nematic liquid crystal display device (3) having a liquid crystal layer (11) sandwiched between a transparent electroded front plate (13) and an active single crystal silicon wafer (14) incorporating NMOS circuitry.

Fig.1.

EP 0 090 987 A1

0090987

W.A. Crossland   J.R. Peters
P.W. Ross   P.J. Ayliffe 35-13-7-5

## COHERENT LIGHT IMAGE GENERATION

This invention relates to the generation of coherent light images, and finds application in electro-optic signal processing, such as radio frequency spectrum analysis, image correlation, or synthetic aperture radar.

In a typical electro-optic signal processor two or more signals are compared by a correlation process involving the superimposing of the Fourier transform of a first coherent light image upon a second, or upon a hologram that is derived from, or models, the Fourier transform of a second coherent light image. This may be used for instance to form an image correlator for identifying the presence and location of a particular object in the field of view of a television camera. A correlator of this type is described in a paper entitled "Coherent Optical Processing : Another Approach" by B.D. Guenther et al., IEEE Journal of Quantum Electronics, Vol. QE-15 No. 12 pp 1348-62 (December 1979), and in a paper entitled "Real-Time Optical Correlation with Solid-State Sources" by J.G. Duthie et al., Society of Photo-Optical Instrumentation Engineers, Vol. 231, 1980 International Optical Computing Conference (1980) pp 281-90. In the apparatus described in these papers the generation of a coherent light image relies upon generating a non-coherent light image by means of a cathode ray tube and projecting this image on to a liquid crystal 'light valve'. The light valve is illuminated with coherent light from a laser, and provides a spatial polarisation modulation of the reflected beam according to the spatial modulation of the incoherent light image projected on to its rear face. A polarisation analyser then converts this polarisation modulation into intensity modulation. The present invention is concerned with an alternative and more direct method of producing a coherent light image by a method not requiring a liquid crystal layer to be backed by a cathode ray tube. The modulation produced by the liquid crystal layer may be the same kind of modulation as referred to above in which birefringence effects are employed to produce polarisation modulation, or alternatively the liquid crystal layer incorporates a pleochroic dye so that amplitude modulation may be produced directly.

According to the present invention there is provided a coherent light image generator, which generator includes a laser, a reflective mode liquid crystal display cell, and drive circuitry therefore, wherein the laser is adapted to direct coherent radiation on to the reflective mode liquid crystal display cell whose liquid crystal layer is sandwiched between an upper transparent electroded plate and a lower plate formed by or carrying a semiconductor layer provided with a matrix array of semiconductor gates connected with an overlying matrix array of liquid crystal cell reflective electrodes adjacent the liquid crystal layer, and wherein the drive circuitry is connected with the gates and is adapted to process an input video signal to modulate as a function of position the optical properties of the liquid crystal layer in accordance with the information content of that video signal by means of an electric field distribution developed between the front electrode and the individual members of the matrix array of electrodes.

The invention also provides an electro-optic signal processor incorporating an image generator as defined in the preceding paragraph, which processor is adapted to form a coherent light image of a video signal applied thereto and superimpose the Fourier transform of that image on a holographic filter, or on the Fourier transform of a second coherent light image.

The invention further provides a coherent light optical correlator in which the presence and location of a particular 'target' object in the field of view of a television camera is identified by cross-correlation produced by using an image generator as defined above to form a coherent light image of that field of view and superimposing a Fourier transform of that image either on a hologram of that particular 'target' object or a model thereof, or on a Fourier transform of a coherent light image of that object or model.

The replacement of the hologram with the Fourier transform of the output of a second coherent light image generator enables the non-mechanical substitution of one target template for another merely by changing the video signal applied to the second image generator.

There follows a description of a coherent light image generator embodying the invention in a preferred form and a description of its use in electro-optic signal processing. The description refers to the accompanying drawings in which :-

Figure 1 is a schematic diagram of the image generator

Figure 2 depicts the basic picture element circuit of image generator liquid crystal cell

Figures 3, 4 and 5 show waveforms of alternative drive systems for the liquid crystal cell, and

Figure 6 is a schematic of the on-wafer circuitry of the liquid crystal cell.

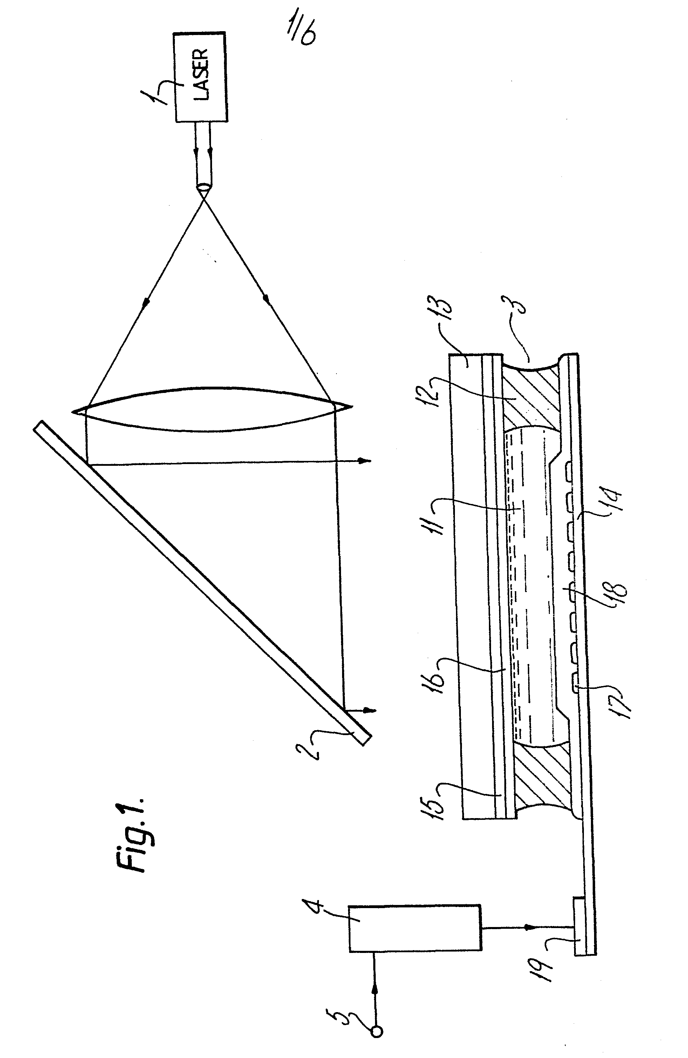

Referring to Figure 1, the basic components of the coherent light generator are a laser 1, a beam splitter 2, a liquid crystal display cell 3, and electronic drive circuitry 4 for processing a video signal input at 5 into a suitable form for application to the liquid crystal cell 3.

The liquid crystal display cell operates in reflective mode and is addressed on a matrix basis via an active semiconductor backing layer. This layer includes at least one transistor for each matrix point. Suitable matrices of such transistors can be made·for instance using the technology of forming thin film transistors on glass substrates (TFT), of forming silicon based transistors on sapphire substrates (SOS), or of forming silicon transistors on standard single crystal silicon wafers (SCS). Having regard to the current state of art in these technologies and to the large number of devices required for a matrix, it is preferred to use single crystal silicon (SCS) technology. Similar reasoning also lead to the choice of NMOS technology.

The generally preferred type of liquid crystal display mode for this application is one involving the use of a dichroic dye in some form of guest-host interaction. An advantage of using a guest-host interaction is that it is able to produce amplitude modulation directly. In some circumstances however, it may be preferable to rely instead upon a birefringence mode of operation which produces polarisation modulation which is subsequently converted to amplitude modulation by means of suitable polarisation analysis such as for instance is used in the 'light valve' referred to previosuly. It is believed that in some circumstances the avoidance of a dye and the consequent need to rely instead upon birefringence effects can facilitate the accurate rendering of multi-level grey-seales.

Several different electro-optic liquid crystal effects involving pleochroic dyes are possible for a display cell operating in reflective mode. These include the dyed nematic without front polariser, the dyed nematic with front polariser, and the dyed cholesteric-nematic phase change modes of operation. If the display is illuminated with unpolarised light the dyed cholesteric-nematic phase change mode of operation may be preferred to a dyed nematic mode because the former offers reasonably high brightness and reasonably good contrast, whereas a dyed nematic offers high brightness but poor contrast when used without a front polariser, and good contrast but poor brightness when used with a front polariser. The poor contrast in the absence of a polariser arises because only one of the two principle planes of polarisation of light through the liquid crystal is subject to absorption by the dye, and thus with unpolarised light about half the light is transmitted through the layer unchanged. When a polariser is used this problem is avoided by filtering out the polarisation that is not attenuated by the dye. This gives good contrast, but a heavy penalty is paid in terms of brightness due to the absorption of light in the polariser. The situation is slightly different in the present instance since most lasers emit plane polarised light. Therefore, taking into account the fact that a typical phase-change cell has an optical transfer characteristic (optical response versus voltage curve) that exhibits a pronounced hysteresis that inhibits grey-scale representations, it is generally preferred to use the dyed nematic mode for coherent light image generation. Such a dyed nematic cell may contain a small amount of chiral additive provided to shorten the switching off time, and possibly also to avoid problems of reverse twist. Only in an application in which the laser illumination is not very bright and is not polarised is the dyed phase-change mode likely to be preferrable to the dyed nematic mode, in which case it is possible to reduce the hysteresis problem by reducing the concentration of chiral additive. Continued to the limit, such a reduction converts the cell into a dyed nematic, but before this is reached there is a trade-off point at which the hysteresis is reduced by an acceptable amount without occasioning too much reduction in contrast. Typically this will occur when the reduction in chiral additive has increased the cholesteric pitch from being between a third and a fifth of the liquid crystal layer thickness to being just greater than the layer thickness.

Referring again to Figure 1, the liquid crystal display cell 3 is a dyed nematic cell on NMOS processed active single crystal silicon, and is constructed by forming an envelope for a layer 11 of liquid crystal by sealing together, with an edge seal 12 a glass sheet 13 and a four inch diameter single crystal wafer of silicon 14. The edge seal may be a plastics seal, thereby avoiding some of the liquid crystal molecular alignment problems associated with the use of high temperatures used in the provision of fused glass frit edge seals. The glass sheet 13 is provided with an internal transparent electrode layer 15 which is covered with a transparent insulating layer 16 designed to prevent the passage of direct current through the cell. The silicon wafer 14 is provided with a matrix array of separate metal electrode pads 17, defining the individual picture elements (pels) of the display. With pads measuring 0.25mm square it is possible to make a display with a 240 by 240 matrix. Greater resolution can be obtained by going to smaller pads. (The additional constraints that this imposes will be referred to later.) The matrix array of pads 17 is similarly covered with a transparent insulating layer 18. The exposed surfaces of the two insulating layers 17 and 18 are treated to promote parallel homogeneous alignment of the molecules of the adjacent liquid crystal layer in the absence of any disturbing applied field. This treatment may be provided for instance by an oblique evaporation of silicon monoxide. Within the area defined by the edge seal, the silicon wafer is held spaced a precise distance from the glass sheet 13 by means of short lengths of glass fibre (not shown) trapped between the two adjacent surfaces so as to provide the liquid crystal layer with a uniform thickness of typically 5 to 15 microns, ± 1 micron. To achieve this uniformity it is generally necessary for the silicon or the glass or both to be sufficiently compliant to enable the surface contour of one of the confining surfaces to conform to that of the other. When using an unbacked silicon wafer it is this that does at least the majority of the conforming, and this is relatively easy to achieve provided that steps are taken to ensure that the unstressed silicon wafer tends to bow inwards (to trap the fibre spacers) rather than outwards, and that clamping jigs, used to hold the assembly while the edge seal is being made, do not exert too much pressure and crush the fibres. Beyond the confines of the edge seal the silicon wafer is provided with a small number of pads 19 by which external electrical connection may be made with the circuitry contained within the wafer.

A particular pel is driven into a partially or fully 'ON' state by applying a potential to its pad 17 that is different from the potential applied to the front electrode 15. Each pad 17 is connected to the output of a MOSFET switch formed in the wafer 14 so that, when the FET is conducting the pad can be charged to the appropriate potential relative to that of the front electrode to activate the liquid crystal pel to the requisite extent. All the pels of a line of the matrix are addressed at the same time, and then the FET's associated with those pels are turned off to isolate those pads while those of other lines of the array are being addressed. The pads of the first-mentioned line are recharged after a complete cycle, and it is necessary to ensure that the leakage of charge away from the pad in the interval between successive chargings is not excessive having regard to the capacitance associated with that pad. Part of this leakage will be through the liquid crystal layer, and part through the turned-off FET, while the capacitance is directly related to the size of the pad.

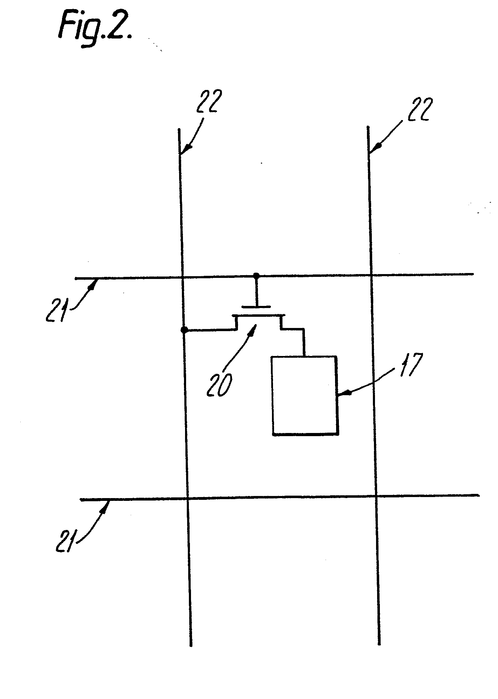

The arrangement of an FET in relation to its associated pad and access lines is diagramatically represented in Figure 2. Each pel pad 17 is connected to the drain of its associated FET 20 whose gate and source are respectively connected to the associated row and column access lines 21 and 22, appropriate to the position of that pel pad in the display matrix. The display is written line by line, with the data appropriate to each line being applied in turn to the column access lines (source lines) 22, while the row access lines (gate lines) 21 are strobed.

In choosing how to make the access lines, it is important to have regard to electrical risetimes, power consumption, and yield in manufacture. Three types of conductor were considered for this particular embodiment: metal, polysilicon, or diffusion. Metal lines have the shortest risetimes (typical resistance is 0.03 ohms per square, and capacitance about $2 \times 10^{-5} Fm^{-2}$), polysilicon next (resistance 20-50 ohms per square, and capacitance about $5 \times 10^{-5} Fm^{-2}$). Diffusions have lower resistance (about 10 ohms per square), but higher capacitance (about $3.2 \times 10^{-4} Fm^{-2}$). The source lines generally require the shorter risetimes, particularly if the display addressing mode calls for all pels to be simultaneously blanked, and hence it is preferred to make them of metal throughout, and to make the gate lines of metal except at the crossovers, where diffusions are used.

As explained previously, electrically insulating layers 16 and 18 have been provided in order to prevent the degradation of the liquid crystal layer by electrolytic effects, and therefore the pels must be driven by an alternating field. In the current state of technology the voltage swing available from an NMOS silicon wafer is less than the peak-to-peak square wave voltage required to drive a conventional phase-change type liquid crystal layer in which the concentration of chiral additive is great enough to provide a cholesteric pitch significantly shorter than the liquid crystal layer thickness.  This means that with this type of electro-optic effect it is necessary to apply an alternating voltage to the front electrode 15 in antiphase with that applied to the pads 17.  This in turn imposes limitations upon the way the matrix must be scanned in order to minimise the appearance of residual 'ON' voltages appearing pels that are nominally 'OFF'. This problem, and way of overcoming it is discussed in the specifications of our Patent Application Nos. 8117927 and 8200217 (W.A. Crossland et al 30X and P.W. Ross 5) to which attention is directed.

Dyed nematic and dyed phase-change cells with minimal chiral additive providing a pitch equal to or greater than the liquid crystal layer thickness have the advantage that they can be driven by lower voltages permitting an addressing scheme in which the front electrode is held at a constant potential.  This permits a relatively simple addressing scheme in which the pads 17 are driven positive with respect to the front electrode for one field of the input data video signal, and negative for the next.  This is satisfactory provided that leakage effects do not give rise to excessive voltage droop between consecutive addressings of each pel.

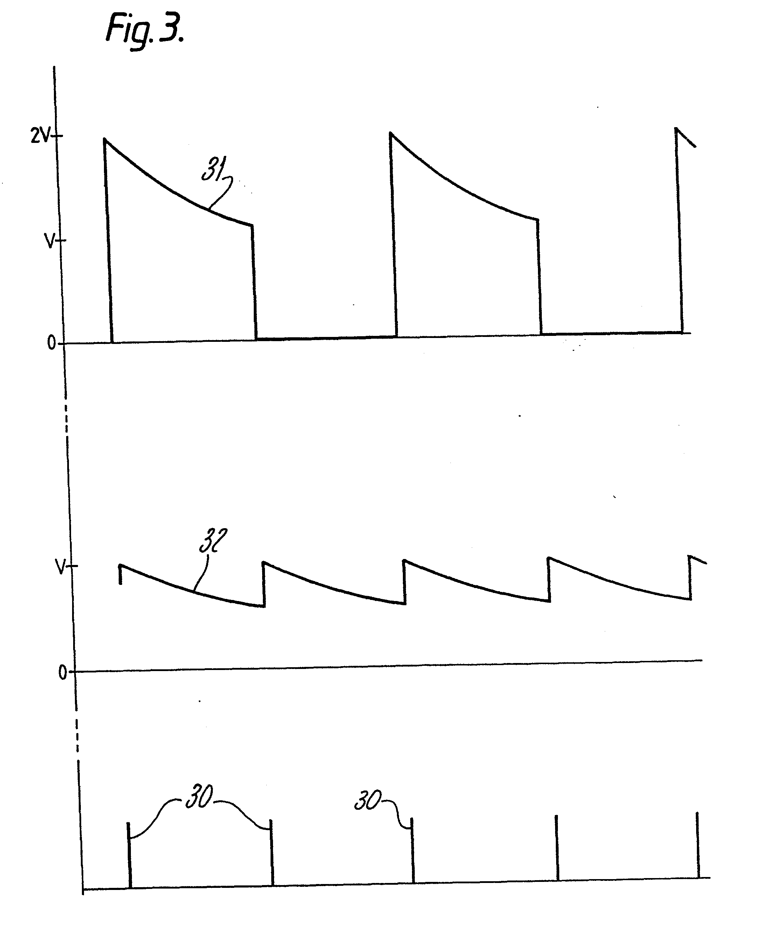

The problems arising from voltage droop can be readily appreciated from an examination of Figure 3, which models a drive system in which the front electrode is held at a voltage V while the voltage applied to a fully 'ON' pad alternates between 2V and 0 volts.  These voltages are applied to the pad by short duration pulses 30 that momentarily open the gate of the associated FET.

The repetition frequency of these pulses is set by the video signal and is typically 50 Hz. Figure 3 depicts the situation where leakage provides a time constant that is short compared with the interval between consecutive pulses 30. The voltage waveform 31 of an 'ON' pad is asymmetrical about the front electrode potential, and hence the integrity of the electrically insulating layers 16 and 18 is seen to be important. The voltage waveform 32 of an 'OFF' pad is also asymmetrical about the front electrode potential, and hence the 'OFF' pels see an unwanted residual drive waveform. If the time constant is the same for all pels across the whole display this problem can be simply resolved by choice of an appropriate offset voltage. In practice however, transistor leakage is generally found to vary significantly over the surface of a wafer, and hence this simple approach to the problem will not achieve the desired result in situations in which transistor leakage is the dominant factor determining the time constant.

The time constant of a pel is governed by the capacitance between the pad 17 and the silicon wafer, and that between the pad and the front electrode. The associated leakage resistance is made up of the leakage resistance through the thickness of the liquid crystal layer and the leakage resistance of the transistor. As the pel size is reduced, it is found that initially there is little effect upon the time constant since the total leakage is dominated by the liquid crystal leakage, and this leakage decreases with the size of the pad at the same rate as the reduction in capacitance. Eventually however, the transistor leakage becomes significant in relation to the liquid crystal leakage, and at some pel size, typically below 100 microns square, the performance of the matrix starts to depend critically on the leakage resistance of the transistors. For this reason it is generally desirable to use a matrix whose pel pads 17 are at least as large as the possible consistent with the resolution requirements imposed by the particular application for which the cell is designed.

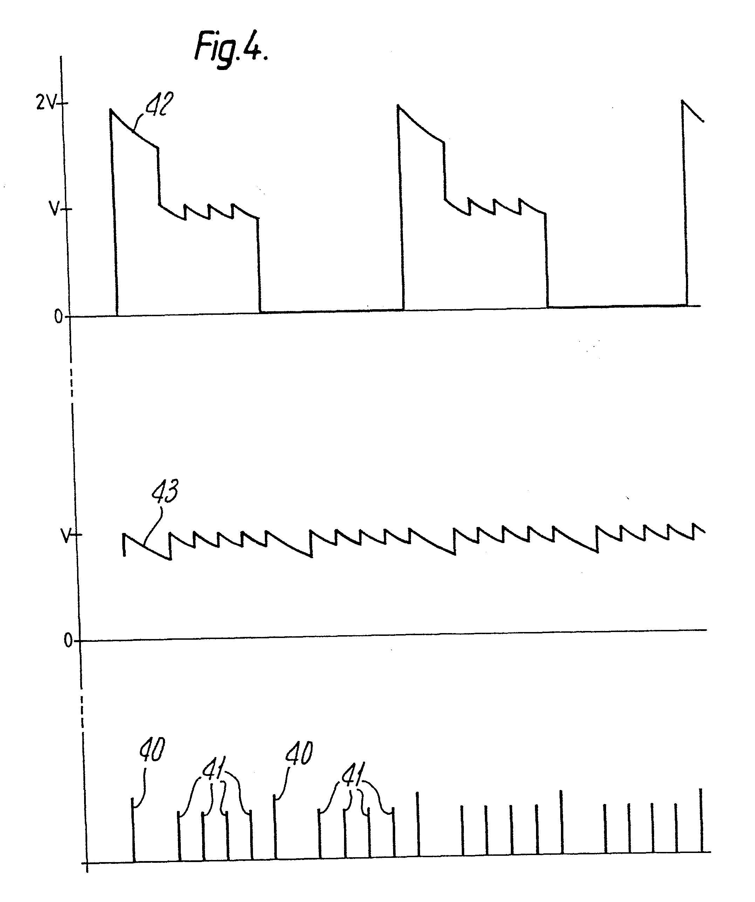

One way of reducing the significance of variation in transistor leakage in displays with small pels is to adopt a drive scheme as depicted in Figure 4. The same voltages are used as have been described with reference to the Figure 3 drive scheme, but in this instance the waveform applied to the gate of the FET associated with the pad consists of a train of data pulses 40 interspersed with a succession of blanking pulses 41. Typically the first blanking pulse occurs about a third of a frame period after the data pulse. The resulting 'ON' and 'OFF' voltage waveforms are depicted respectively by waveforms 42 and 43. In this way the voltage droop seen by fully 'ON' pels is reduced, and more importantly, the proportional difference in rms voltage seen by high leakage and low leakage pels is reduced. Similarly the voltage seen by 'OFF' pels is also reduced. The disadvantage of this drive scheme is that it results in a reduced rms voltage seen by 'ON' pels for a given voltage swing, but this may be less significant than the reduction in disparity of appearance of nominally equally 'ON' cells. The time interval between addressing and first blanking will normally be less than half the time interval between consecutive addressings for the blanking to have any significant effect upon the problems of voltage droop, thereby reducing the rms voltage by a factor of at least $\sqrt{2}$.

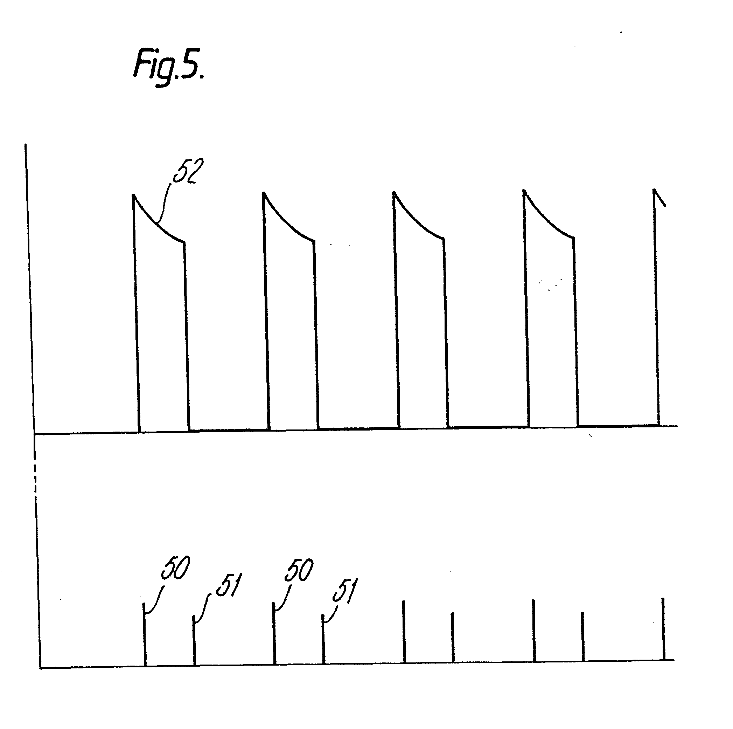

The residual voltage seen by 'OFF' pels can be totally eliminated by adopting the drive scheme depicted in Figure 5. In this instance the front electrode is maintained at 0 volts. A data pulse 50 opens the FET, and, in the case of a fully 'ON' pel causes the pad to be taken to the full voltage of 2V volts. After a predetermined interval, typically equal to a third of the frame period or less, a blanking pulse 51 restores the pad to 0 volts, producing the waveform 52. In this instance only one blanking pulse is required between each pair of consecutive data pulses. The data pulse for a fully 'OFF' pel keeps the voltage of the pad at 0 volts, and the blanking pulse leaves its voltage unchanged. The advantage of this scheme is that the rms voltage seen by an 'OFF' pel is truly zero whatever the leakage situation. A disadvantage is that there is always a significant dc component to the drive applied to 'ON' pels, and hence the insulating layers 16 and 18 which serve to block dc must be of high integrity.

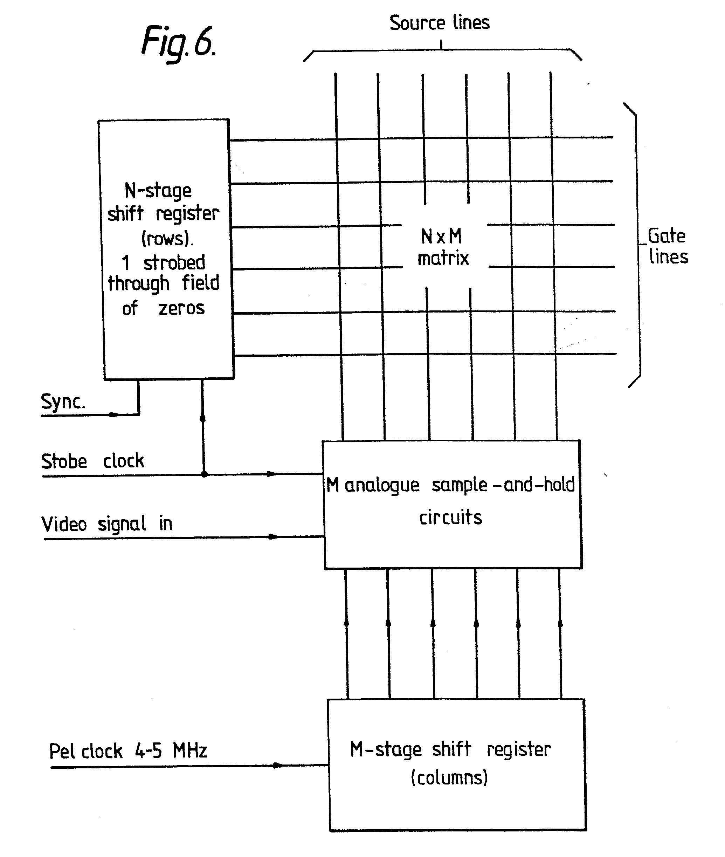

One of the features of using a silicon wafer to back the liquid crystal layer is that the borders of the wafer beyond the confines of the display area are conveniently used for the fabrication of access circuitry designed to reduce the number of external connections that need to be made with the wafer. Figure 6 is a schematic of on-wafer circuitry used to reduce these connections to a manageable number. It will be seen that the source and gate lines of the matrix are each accessed by the circuitry from one end only, and hence it is possible to duplicate the access circuitry, using a mirror image layout around the two unused sides of the array. It will be appreciated that the display calls for the correct functioning of a very large number of active devices in the wafer, and this duplication provides a measure of redundancy that improves the manufacturing yield of acceptable wafers. A wafer with this redundancy may be tested before assembly to select which part of the access circuitry to use, and which to disable.

It may be noted that for this particular application the display is preferably specularly reflecting. The reflection is conveniently provided by the material of the pel pads 17, and it is found that conventional metallisation used in standard MOS technology provides acceptable reflecting properties, and hence in the manufacture of the wafer entirely standard MOS manufacturing processes are used right up to the provision of the molecular alignment treatment required for achieving the requisite orientation of the liquid crystal molecules at the adjacent surface of the liquid crystal layer 11.

When the cell has been assembled, it is vacumm filled via an aperture formed by a break (not shown) in the edge seal 12. Once the enclosure has been filled the aperture is sealed off with a suitable plug.

An example of a suitable liquid crystal filling is the nematic guest/host mixture marketed by BDH under the designation D86 (black dye) in host E63. To this may be added a small quantity of chiral additive, typically the cyano-biphenyl marketed by BDH under the designation CB15. Normally this will be added in a proportion that keeps the cholesteric pitch greater than the thickness of the liquid crystal layer so as to avoid introducing excessive hysteresis in the optical transfer characteristic of the mixture.

CLAIMS :

1.        A coherent light image generator, which generator includes a laser, a reflective mode liquid crystal display cell, and drive circuitry therefore, wherein the laser is adapted to direct coherent radiation on to the reflective mode liquid crystal display cell whose liquid crystal layer is sandwiched between an upper transparent electroded plate and a lower plate formed by or carrying a semiconductor layer provided with a matrix array of semiconductor gates connected with an overlying matrix array of liquid crystal cell reflective electrodes adjacent the liquid crystal layer, and wherein the drive circuitry is connected with the gates and is adapted to process an input video signal to modulate as a function of position the optical properties of the liquid crystal layer in accordance with the information content of that video signal by means of an electric field distribution developed between the front electrode and the individual members of the matrix array of electrodes.

2.        A coherent light image generator as claimed in claim 1, wherein the display cell is a dyed nematic cell.

3.        A coherent light image generator as claimed in claim 1, wherein the display cell is a dyed phase-change cell.

4.        A coherent light image generator as claimed in claim 3, wherein the pitch of the cholesteric liquid crystal layer of the cell is greater than the layer thickness.

5.        A coherent light image generator as claimed in claim 1, wherein the display cell is a dye-free variable birefringence effect liquid crystal cell.

6.        A coherent light image generator as claimed in any preceding claim, wherein the semiconductor layer is a single crystal silicon wafer.

7.        A coherent light image generator as claimed in claim 6, wherein the wafer is an NMOS wafer.

8. A coherent light image generator as claimed in any preceding claim, wherein the drive circuitry is adapted to address repetitively each of the reflective electrodes of the matrix array via an associated gate, and, after each addressing, to close the gate for a predetermined period, and then reopen at least once to discharge the reflective electrode and reclose, before refreshing the reflective electrode with its next addressing with data.

9. A coherent light image generator as claimed in claim 8, wherein the drive circuitry is adapted to discharge each reflective electrode at a time 't' after it has been addressed, which time 't' is less than half the time interval between consecutive addressings of that electrode.

10. A coherent light image converter substantially as hereinbefore described with reference to the accompanying drawings.

11. An electro-optic signal processor incorporating an image generator as claimed in any preceding claim, which processor is adapted to form a coherent light image of a video signal applied thereto and superimpose the Fourier transform of that image on a holographic filter.

12. A coherent light optical correlator in which the presence and location of a particular object in the field of view of a television camera is identified by cross-correlation produced by forming a coherent light image of that field of view and superimposing a Fourier transform of that image on a hologram of that particular object or a model thereof, wherein the coherent light image of the television camera field of view is provided by an image generator as claimed in any claim of claims 1 to 10.

13. An electro-optic signal processor incorporating two coherent light image generators at least one of which is as claimed in any claim of claims 1 to 10, which processor is adapted to form a coherent light image of a video signal applied to the one of the image generators and superimpose the Fourier transform of that image upon the Fourier transform of the coherent light image of a video signal applied to the other image generator.

14.     A coherent light optical correlator in which the presence and location of a particular 'target' object in the field of view of a television camera is identified by cross-correlation produced by forming a coherent light image of that field of view using an image generator as claimed in any claim of claims 1 to 10 and superimposing the Fourier transform of that image upon the Fourier transform of the coherent light image produced by a second coherent light image generator to which is applied a video signal representative of that 'target' object or a model thereof.

Fig.1.

0090987

1/6

W.A. CROSSLAND 35-13-7-5

Fig.2.

0090987

Fig. 3.

W.A. CROSSLAND 35-13-7-5

Fig.4.

W.A.CROSSLAND 35-13-7-5

Fig.5.

_Fig. 6._

Source lines

N-stage
shift register
(rows).
1 strobed
through field
of zeros

N x M
matrix

Gate
lines

Sync.

Stobe clock

Video signal in

M analogue sample –and–hold
circuits

Pel clock 4-5 MHz

M-stage shift register
(columns)

W.A. CROSSLAND 35-13-7-5

European Patent Office

**EUROPEAN SEARCH REPORT**

| | DOCUMENTS CONSIDERED TO BE RELEVANT | | EP 83102712.3 |
|---|---|---|---|

| Category | Citation of document with indication, where appropriate, of relevant passages | Relevant to claim | CLASSIFICATION OF THE APPLICATION (Int. Cl. ³) |
|---|---|---|---|
| A,D | IEEE JOURNAL OF QUANTUM ELECTRO-NICS, vol. QE-15, no. 12, December 1979<br><br>B.D. GUENTHER et al. "Coherent Optical Processing Another Approach"<br>pages 1348-1362<br><br>* Page 1349, Chap. II - page 1351; fig. 3 *<br>-- | 1,11, 12 | G 02 F 1/13<br>G 02 F 1/133<br>G 02 F 3/00<br>H 04 N 3/12 |
| A,D | PROCEEDINGS OF THE SOCIETY OF PHOTO-OPTICAL INSTRUMENTAION EN-GINEERS, vol. 231, 1980<br>1980 INTERNATIONAL OPTICAL COMPU-TING CONFERENCE (Book I)<br><br>J.G. DUTHIE et al. "Real-time optical correlation with solid--state sources"<br>Pages 281-290<br><br>* Fig. 1 *<br>-- | 1,11, 12 | |
| A | US - A - 3 744 879 (BEARD)<br>* Fig. 1,3 *<br>-- | 1,11-14 | TECHNICAL FIELDS SEARCHED (Int. Cl. ³)<br><br>G 02 F 1/00<br>G 02 F 3/00<br>G 02 B 27/00 |
| A | US - A - 4 018 509 (BOSWELL)<br>* Fig. 9 *<br>-- | 1,5,11 | G 09 G 3/00<br>G 09 G 9/00<br>H 01 L 31/00<br>H 01 J 31/00 |
| A | GB - A - 2 042 238 (MATSUSHITA)<br>* Fig. 1; lines 5-55 *<br>-- | 1,6,8 | H 01 S 3/00<br>H 04 N 3/00<br>H 04 N 1/00 |

The present search report has been drawn up for all claims

| Place of search | Date of completion of the search | Examiner |
|---|---|---|
| VIENNA | 14-06-1983 | GRONAU |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82

| DOCUMENTS CONSIDERED TO BE RELEVANT | | | CLASSIFICATION OF THE APPLICATION (Int. Cl. ³) |
|---|---|---|---|
| Category | Citation of document with indication, where appropriate, of relevant passages | Relevant to claim | |
| A | <u>DE - A1 - 2 811 290</u> (WESTINGHOUSE) <br> * Page 6, line 14 - page 13, line 11 * <br> -- | 1,8 | |
| A | <u>GB - A - 2 066 545</u> (KABUSHIKI) <br> * Page 2, lines 6-13; fig. 1 * <br> -- | 2,3,6 | |
| A | <u>EP - A1 - 0 014 540</u> (CLARK) <br> * Claim 2 * <br> ----- | 4 | TECHNICAL FIELDS SEARCHED (Int. Cl. ³) |